# EUROPÄISCHE PATENTANMELDUNG

(11) **EP 1 110 478 A1**
(43) Veröffentlichungstag der Anmeldung: **27.06.2001**
(21) Anmeldenummer: 00128378.7
(22) Anmeldetag: 22.12.2000
(51) Int. Cl.: A46D 3/00, B29C 45/14

(54) **Verfahren zur Herstellung eines Bürstenkopfes im Wege des Spritzgiessens**

(30) Priorität: 22.12.1999 DE 19962188
(71) Anmelder: M + C Schiffer GmbH, 53577 Neustadt, Wied (DE)
(72) Erfinder: Meyer, Berthold, 53577 Neustadt (DE); Broecker, Gerd, 56584 Rüscheid (DE)
(74) Vertreter: Dropmann, Martin Clemens Hubert, Dr.

(57) **Zusammenfassung**

Die vorliegende Erfindung betrifft ein Verfahren zur Herstellung eines Bürstenkopfes mit einem Borstenbündel tragenden Bürstenkopfkörper, insbesondere für Zahnbürsten im Wege des Spritzgießens, bei dem zur Ausbildung eines Borstenträgers eine erste Kunststoffkomponente in ein erstes Formnest eingespritzt wird und in das erste Formnest hineinragende Enden von Borstenfilamenten von der ersten Kunststoffkomponente umgeben werden. Um eine vollständige Formfüllung und eine gute Abbildung der Formnestgeometrie sicherzustellen, dabei aber gleichzeitig ein Eindringen von Kunststoffmasse in Kanäle, in denen die Borstenfilamente gehalten sind, zu vermeiden, wird mit der vorliegenden Erfindung vorgeschlagen, dass der in dem ersten Schritt hergestellte Borstenträger in ein weiteres Formnest umgesetzt wird, welches größer als der Borstenträger ist und welches mit einer Hartkomponente gefüllt wird. Weiterhin betrifft die vorliegende Erfindung einen Bürstenkopf, insbesondere für eine Zahnbürste mit mindestens einem Borstenbündel tragenden Bürstenkopfkörper, in dem die befestigungsseitigen Enden von Borstenfilamenten mittels Umspritzen eingebettet sind, wobei zur Bereitstellung eines den obigen Anforderungen genügenden Bürstenkopfes erfindungsgemäß vorgeschlagen wird, dass der Bürstenkörper einen die Borstenfilamente befestigungsseitig umgebenden Borstenträger umfasst, der in eine Hartkomponente eingebettet ist.

## Beschreibung

Die vorliegende Erfindung betrifft ein Verfahren zur Herstellung eines Bürstenkopfes, insbesondere für Zahnbürsten mit mindestens einem Borstenfilamente tragenden Bürstenkopfträger im Wege des Spritzgießen, bei dem zur Bildung eines Borstenträgers eine erste Kunststoffkomponente in ein erstes Formnest eingespritzt wird und in das erste Formnest hineinragende Enden von Borstenfilamenten von der ersten Kunststoffkomponente umgeben werden. Die vorliegende Erfindung betrifft weiterhin einen Bürstenkopf, insbesondere für eine Zahnbürste mit einem Borstenfilamente tragenden Bürstenkopfkörper, in dem die befestigungsseitigen Enden von Borstenfilamenten mittels Umspritzen eingebettet sind.

Ein Verfahren der vorstehend genannten Art ist beispielsweise aus der auf die Anmelderin zurückgehenden DE 845 933 bekannt. Das gattungsbildende Verfahren unterscheidet sich von dem herkömmlichen Verfahren zur Herstellung eines Bürstenkopfes, bei dem bei der spritzgießtechnischen Ausbildung des Bürstenkopfes Ausnehmungen in dem Bürstenkopf ausgespart werden, in denen Borstenfilamente mittels Ankern nachträglich eingebracht und gehalten werden, insofern, als dass die Borstenfilamente unmittelbar beim Spritzgießen mit dem Bürstenkopfkörper verbunden werden. Um eine möglichst zuverlässige Verbindung zwischen dem Bürstenkopfkörper und den üblicherweise zu Borstenbündeln zusammengefassten Borstenfilamenten zu erzielen, werden die Borstenbündel regelmäßig an ihren befestigungsseitigen Enden vor dem Einspritzen der Kunststoffkomponente zu einer Fertigung angeschmolzen. Die Verdickung und/oder die befestigungsseitigen Enden der Borstenfilamente werden bei dem gattungsbildenden Verfahren ganz oder teilweise von der erste Kunststoffkomponente umgeben.

Das gattungsbildende Verfahren eignet sich insbesondere zur Herstellung von Bürsten mit einem verhältnismäßig dünnen Bürstenkopf und ist auch aus Kostengründen zu bevorzugen. Problematisch ist jedoch die Abdichtung von Kanälen des Spritzgusswerkzeuges, in welchen die Borstenbündel gehalten werden. Im Hinblick auf eine möglichst gute Formfüllung und eine genaue Abbildung der Formnestgeometrie ist ein möglichst hoher Spritzdruck zu bevorzugen. Die die Borstenbündel haltenden Kanäle bilden jedoch Auslässe, in die bei einem übermäßigen Spritzdruck Kunststoffmasse gedrückt wird. Dadurch wird die Bündelstellung der Borstenbündel verdorben. Die Bürste ist unbrauchbar. Auch werden die Bündel bei einem übermäßigen Spritzdruck aus den Kanälen herausgedrückt.

Es hat im Stand der Technik nicht an Vorschlägen gefehlt, dieses Problem zu beheben. So wird mit der DE 38 32 520 vorgeschlagen, in die Kanäle Hülsen einzusetzen, die an ihren formnestseitigen Enden geschlitzt sind und die an einer konischen Fläche des Spritzgusswerkzeuges anliegen und derart radial nach innen gedrückt werden, um das in der Hülse gehaltene Borstenbündel abzudichten. Auch ist es aus der DE 15 54 925 bekannt, die Borstenbündel in einer Klemmplatte zu halten, die das Formnest gegenüber den Borstenbündeln bei Anliegen des Spritzgussdruckes abdichten soll. Die genannten Lösungsvorschläge sind jedoch konstruktiv aufwendig. Der letztgenannte Lösungsvorschlag lässt sich im übrigen nur bei versetzt zueinander angeordneten Kanälen realisieren. Dadurch wird die Geometrie des Borstenfeldes vorgegeben und in unerwünschter Weise beschränkt.

Im Stand der Technik ist es weiterhin bekannt, die durch Anschmelzen ausgebildete Verdickung an den befestigungsseitigen Enden der Borstenbündel unmittelbar an die Mündung der die Borstenbündel haltenden Kanäle anzulegen (DE 35 11 528). Die Bündel werden bei einer derartigen Verfahrensführung jedoch nur mit unzureichender Auszugskraft in dem Bürstenkopfkörper gehalten. Abhilfe soll hier eine Verlängerung der Kanäle in das Formnest schaffen, wie es mit DE 36 42 124 vorgeschlagen worden ist. Dadurch entstehen jedoch von der Beborstungsfläche in den Bürstenkörper hineinragende und die einzelnen Borstenbündel umgebende Kanäle, in denen sich Bakterien und Schmutz festsetzen können, was insbesondere bei Bürsten für die Körperpflege, speziell Zahnbürsten, nicht zu tolerieren ist.

Neben konstruktiven Maßnahmen zur Abdichtung des Formnestes ist es weiterhin aus dem Stand der Technik bekannt, die Verfahrensführung anzupassen und beim Einspritzen der Kunststoffmasse einen verhältnismäßig geringen Spritzdruck wirken zu lassen, welcher nach dem Einfrieren der von den Borstenbündeln durchragten Oberfläche des Bürstenkopfkörpes erhöht wird, um einem thermischen Schwund entgegen zu wirken und eine möglichst vollständige Abbildung der Formnestgeometrie zu erreichen. Es sind konstruktive Maßnahmen an der Formnestgeometrie vorgeschlagen worden, die ein möglichst frühzeitiges Einfrieren der von den Borstenbündeln durchragten Oberfläche des Bürstenkopfkörpers fördern sollen.

Mit EP 0 749 711 wird beispielsweise vorgeschlagen, einen in das Formnest nach innen vorspringenden Kragen, welcher jedes einzelne Borstenbündel umgibt, an dem Spritzgusswerkzeug auszubilden. Bei diesem Vorschlag ergeben sich hygienische Probleme, da sich auch dieser Kragen an der fertigen Bürste als die Borstenbündel umgebender Ringspalt abbildet, in dem sich Schmutz und Verunreinigungen festsetzen können. Gemäß einem weiteren Vorschlag der EP 0 759 711 soll das Formwerkzeug einen jedes Borstenbündel umgebenden ringförmigen Vorsprung aufweisen, um das zügige Einfrieren von die jeweiligen Borstenbündel umgebender Formmasse zu fördern. Auch diese Maßnahme führt zu einer konturierten, d.h. unebenen Beborstungsfläche. Die Beborstungsfläche ist die von den Borstenbündeln durchragte Oberfläche des Bürstenkopfkörpers.

Die vorstehend diskutierten Vorschläge, mit denen ein Austritt von Kunststoffmasse aus den Kanälen beim Umspritzen der befestigungsseitigen Borstenbündel verhindert werden soll, haben das zugrundeliegende Problem nicht vollständig beseitigen können. Bei einem zumindest zu Beginn der Formfüllung geringen Spritzdruck wird die Formnestgeometrie nicht mit der notwendigen Genauigkeit abgeformt. Wird der Spritzdruck erhöht, so sind zusätzliche Abdichtmaßnahmen erforderlich, um ein Eindringen von Kunststoffmasse in die die Borstenbündel haltenden Kanäle zu vermeiden. Im übrigen wird das gattungsbildende Verfahren regelmäßig lediglich mit leicht fließendem Polypropylen durchgeführt, welches einen hohen Schmelzindex (MFI) aufweist und welches sich bei verhältnismäßig geringen Einspritzdrücken von beispielsweise 10 bis 15 bar noch bei recht guter Formfüllung verarbeiten lässt.

Viele Bürsten, insbesondere Zahnbürsten sowie die Bürstenkopfkörper dieser Zahnbürsten sollen jedoch aus Kunststoffen mit schwierigen Fließeigenschaften, die sich nur mit verhältnismäßig hohen Einspritzdrücken von einigen hundert bar in das Formnest einbringen lassen, hergestellt werden. Der Einsatz derartiger hochwertiger Kunststoffe ist bis heute auf solche Bürstenköpfe beschränkt, bei denen der Bürstenkopfkörper zunächst mittels Spritzgießen ausgebildet und nachträglich mit Borstenbündeln versehen wird, die über metallische Anker in dem Bürstenkopfkörper verankert werden.

Der vorliegenden Erfindung liegt die Aufgabe zugrunde, die obigen Probleme zu lösen und ein Verfahren zur Herstellung eines Bürstenkopfes der eingangs genannten Art dahingehend weiterzuentwickeln, dass ein Bürstenkopfkörper oder ein den Bürstenkopfkörper enthaltender kompletter Zahnbürstenkörper mit einwandfreier Oberfläche und genauer Abbildung der Formnestgeometrie herstellbar ist, ohne dass befürchtet werden muss, dass Kunststoffmasse in die die Borstenbündel haltenden Kanäle eindringt und die den Bürstenkopfkörper überragenden Borstenfilamente in irgendeiner Art und Weise beschädigt. Der vorliegenden Erfindung liegt weiterhin die Aufgabe zugrunde, eine diesen Anforderungen genügenden Bürstenkopf bzw. einen den Bürstenkopfkörper enthaltenden Zahnbürstenkörper bereitzustellen.

Zur Lösung der obigen Aufgabe wird mit der vorliegenden Erfindung das gattungsbildende Verfahren dadurch weitergebildet, dass der Borstenträger zur Bildung des Bürstenkopfkörpers in ein weiteres Formnest umgesetzt wird, welches größer als der Borstenträger ist und welches mit einer Hartkomponente gefüllt wird. Bei dem erfindungsgemäßen Verfahren wird der Bürstenkopfkörper mittels Zweikomponenten- oder Zweifarben- oder Mehrkomponenten-Spritzguss hergestellt. Bei dem ersten Schritt des Zweikomponenten-Spritzgießen wird ein leicht fließender Kunststoff, der vorzugsweise eine geringe Plasifiziertemperatur hat, in das erste Formnest eingefüllt. Diese erste Kunststoffkomponente kann insbesondere ein leicht fließender Kunststoff, der sich bei geringen Temperaturen verarbeiten lässt und der einen hohen Schmelzindex (MFI) hat, sein. Die erste Kunststoffkomponente wird ausschließlich im Hinblick darauf ausgewählt, dass eine hinreichende Formfüllung bei möglichst geringen Temperaturen und geringen Drücken möglich ist. Eine vollständige Ausfüllung des Formnestes ist nicht erforderlich, da vorzugsweise allerhöchstens die Oberfläche des aus der ersten Komponente gebildeten Kernes des Bürstenkopfkörpers an dessen Oberfläche sichtbar ist. Eine Kunststoffkomponente mit einer verhältnismäßig geringen Plasifiziertemperatur wird insbesondere im Hinblick auf die thermische Beeinflussung der in das erste Formnest hineinragenden Borstenfilamente gewählt. Da das Wiederaufrichtvermögen dieser Borstenfilamente durch verstreckt eingefrorene Molekülketten gewährleistet wird, soll eine Erwärmung der eingefrorenen Moleküle und damit eine zumindest teilweise Reorientierung der Moleküle möglichst vollständig vermieden werden.

Hinsichtlich der Auswahl und des Werkstoffes und der Spritzgussparameter zur Verarbeitung der zweiten Komponente bestehen keinerlei Beschränkungen. Die Borstenfilamente sind in dem aus der ersten Kunststoffkomponente gebildeten Borstenträger gehalten. Dieser Borstenträger dichtet die die Borstenfilamente haltenden Kanäle des zweiten Formnestes ab. Hohe Spritzdrücke können somit nicht an die Mündung der Kanäle gelangen und nicht zu einem Ausdrücken der zweiten Kunststoffkomponente in die Kanäle führen. Es lassen sich auch hochwertige oder transparente Kunststoffe mit schwierigen Fließeigenschaften, wie beispielsweise ABS, CA, CAP, PET, POM und PA zur Bildung des Bürstenkopfkörpers verwenden, ohne auf die Vorteile einer ankerlosen Befestigung der Bündel in dem Bürstenkopf verzichten zu müssen.

Aufgrund der Abdichtung der Kanäle durch den Borstenträger und der Einbettung der Borstenbündel in denselben unterliegt das Einspritzen der zweiten oder einer weiteren Kunststoffkomponente in das zweite Formnest keinen Beschränkungen hinsichtlich des Einspritzdruckes, der Auswahl der Werkstoffe bzw. der Einspritztemperatur des Kunststoffes. Durch Füllen des weiteren Formnestes mit der Hartkomponente wird der zuerst gebildete Borstenträger umspritzt. Bei diesem Umspritzen kann der Borstenträger nahezu vollständig in die Hartkomponente eingebettet werden. Dann wird nahezu die gesamte Oberfläche des Bürstenkopfkörpers bzw. einer den Bürstenkopfkörper enthaltenden Bürste nahezu ausschließlich von der Hartkomponente gebildet. Der Borstenträger kann in dem weiteren Formnest aber lediglich einseitig ggf. unter Zwischenlage einer oder mehrerer weiterer Komponenten, vorzugsweise einer weichelastischen Komponente mit der Hartkomponente verbunden werden. Dabei wird der Bürstenkopf überwiegend oder ausschließlich durch den Borstenträger gebildet, wohingegen lediglich der Bürstenkörper durch Einspitzen der Hartkomponente in das zweite Formnest und entsprechende Verfahrensführung zur präzisen Abbildung der Formnestgeometrie als hochgenaues Bauteil ausgeformt ist.

Der in dem ersten Formnest ausgebildete Borstenträger wird erfindungsgemäß mit einer Hartkomponente mittels Umspritzen verbunden, um bestimmte Teile oder aber nahezu die gesamte Oberfläche der Bürste präzise mit der Hartkomponente auszufüllen. Zwischen dem Borstenträger und der Hartkomponente können weitere Kunststoffkomponenten, insbesondere weichelastische Komponenten durch zwischengeschaltete Spritzgussschritte ausgeformt werden. Auch können nach der Füllung des weiteren Formnestes mit der Hartkomponente weitere Spritzgussschritte zur Ausbildung insbesondere weichelastischer Funktionselemente oder -flächen folgen. Die weiteren bevorzugten Ausgestaltungen des Verfahren liegen im Belieben des Fachmannes und es ist für das erfindungsgemäße Verfahren wesentlich, dass in dem weiteren Formnest die Hartkomponente ohne Beschränkung der Verfahrensparameter eingefüllt werden kann und beispielsweise die Ausbildung eines präzisen, mittelbar oder unmittelbar mit dem Borstenträger verbundenen Bauteiles möglich ist.

Bei einer denkbaren Verfahrensführung wird an dem Borstenträger zunächst eine weichelastische Komponente, insbesondere ein thermoplastischer Elastomer angespritzt. Hierdurch können beispielsweise weichelastische Reinigungselemente, die sich nach Art von länglichen Noppen parallel zu den Borstenbündeln erstrecken, an dem Borstenträger vorgesehen werden. Das derart erstellte Bauteil wird danach in ein weiteres Formnest umgesetzt und schließlich mit der Hartkomponenten umspritzt. Bei dieser Verfahrensführung kann der Borstenträger insbesondere derart in das weitere Formnest eingesetzt werden, dass der erstarrte Borstenträger endseitig das weitere Formnest vollständig abdeckt. Bei dieser Ausgestaltung wird ein Bauteil erhalten, welches an der von der Beborstung durchragten Oberfläche keine Flächen aufweist, welche durch die Hartkomponente gebildet sind. Andererseits sind auf der Beborstungsseite abgewandten Seite des Borstenträgers solche Flächen insbesondere vorzusehen, die Funktionsflächen für eine Verbindung des Borstenträgers an einen Griffstiel dienen. Die Funktionsflächen können als Rastflächen ausgebildet sein, um den Borstenträger mit dem Griffstiel zu verrasten. Sofern der Griffstiel einen Antrieb einer elektrischen Zahnbürste enthält, können darüber hinaus durch die Hartkomponente Funktionsflächen vorgesehen sein, durch welche der Borstenträger gelenkig, verschwenkbar oder drehbar gelagert ist. Darüber hinaus können die Funktionsflächen Verbindungselemente bilden, über welche der Borstenträger mit dem Antrieb lösbar zu verbinden ist. Schließlich können auch solche Funktionsflächen vorgesehen sein, die eine Abdichtung des Borstenträgers gegenüber dem Griffstiel bewirken.

Mit dem erfindungsgemäßen Verfahren kann ein Bürstenkopf mit mehreren Bürstenkopfkörpern hergestellt werden, die beispielsweise über einen von einer weichelastischen Masse umgebenen Steg aneinander gekoppelt sind. In einem derartigen Fall wird nach der Herstellung des Bürstenkopfkörpers mittels Zweikomponenten-Spritzgießen der bzw. die Bürstenkopfkörper in ein nachfolgendes Formnest eingesetzt, welches größer als das weitere Formnest ist und welches mit einer weichelastischen Komponente gefüllt wird. Auf diese Weise lassen sich in dem Bürstenkopf und/oder am Übergang zwischen dem Bürstenkopf und dem Stiel eine oder mehrere elastische Zonen ausbilden, in denen die Hartkomponente allerhöchstens als dünner Steg vorgesehen ist und die nahezu ausschließlich eine weichelastische Komponente, insbesondere einen thermoplastischen Elastomer aufweisen, der die Freiräume zwischen sich gegenüber liegenden Bürstenkopfsegmenten abdeckt und das Eindringen von Schmutz und/oder Bakterien verhindert.

Die vorstehend genannten Umspritzungen eines Bürstenkopfkörpers mit weichelastischer Masse sind beispielsweise aus der DE 39 23 495 als Beispiel für einen Bürstenkopf, der elastisch an den Griffstiel gehalten ist, oder aber aus der WO 97/24048 als Beispiel für elastische Kopfsegmente bekannt. Im Gegensatz zu diesem vorbekannten Stand der Technik wird bei dem erfindungsgemäßen Verfahren bereits der die Borstenfilamente haltende Bürstenkopfkörper mittels Zweikomponenten-Spritzgießen hergestellt. Der mittels Zweikomponenten-Spritzgießen hergestellte Bürstenkopfkörper kann selbstverständlich eine oder mehrere elastische Zonen aufweisen, in denen mittels Umspritzen einer dritten Komponente eingebrachtes thermoplastisches Elastomer enthalten ist oder aber unter Zwischenlage einer thermoplastisches Elastomer oder dergleichen enthaltenden elastischen Zone an einem Griffstiel befestigt sein.

Vorzugsweise wird bei dem erfindungsgemäßen Verfahren als erste Kunststoffkomponente ebenfalls eine Hartkomponente verwendet. Diese Hartkomponente kann beispielsweise Polypropylen sein. Die Vorteile des erfindungsgemäßen Verfahrens lassen sich auch dann besonders gut verwirklichen, wenn das erste Formnest mit einer Kunststoffmasse gefüllt wird, die einen verhältnismäßig hohen Schmelzindex (MFI) hat, wohingegen das weitere Formnest mit einer Hartkomponente gefüllt wird, die einen verhältnismäßig geringen Schmelzindex hat.

In gleicher Weise ist es zu bevorzugen, zunächst eine Kunststoffkomponente mit einer geringen Plastifiziertemperatur in das erste Formnest einzuspritzen und das weitere Formnest mit einer Hartkomponente zu füllen, die eine höhere Plastifiziertemperatur hat.

Hinsichtlich des Bürstenkopfes der eingangs genannten Art wird die der Erfindung zugrundeliegende Aufgabe dadurch gelöst, dass der Bürstenkopfkörper einen die Borstenfilamente befestigungsseitig umgebenden Borstenträger umfasst, der mit einer Hartkomponente verbunden ist. Durch die Hartkomponente kann ein beliebiges Bauteil, insbesondere aber ein hochpräzises Bauteil an dem Borstenträger ggf. unter Zwischenlage einer weichelastischen Schicht oder unmittelbar angeformt werden oder ein Segment des Bürstenkörpers als Präzisionsbauteil ausgeformt.

Sofern der Borstenträger zumindest einen Teil der von den Borstenfilamenten durchragten Oberfläche des Bürstenkopfkörpers bildet, kann ein Eindringen von Schmutz, Bakterien und dergleichen zwischen den Borstenträger und den diesen einbettenden vorzugsweise als Schale ausgeformten Hartkomponente dadurch vermieden werden, dass der Borstenträger stoffschlüssig mit der Hartkomponente verbunden ist. Besonders zu bevorzugen ist es, den Borstenträger umfänglich von der Hartkomponente zu umgeben. Umfänglich bedeutet, dass die Hartkomponente an den sich im wesentlichen parallel zu den Borstenfilamenten erstreckenden Seitenflächen des Bürstenkopfes vorgesehen ist. Zusätzlich wird die Hartkomponente vorzugsweise auch an der Unterseite des Bürstenkopfes, die der von den Borstenfilamenten durchragten Beborstungsfläche gegenüberliegend ausgebildet ist, vorgesehen. Da die Hartkomponente mit erhöhtem Spritzdruck in das zweite Formnest eingespritzt werden kann, lassen sich durch die umfänglich den Borstenträger umgebende Hartkomponente Details an der Außenfläche des Bürstenkopfkörpers mittels Spritzgießen mit hoher Genauigkeit ausbilden. Derartige Funktionsflächen sind insbesondere Rastnasen oder dergleichen, mit denen der Bürstenkopfkörper in einer an den Bürstenkopf ausgebildeten Ausnehmung gehalten wird. Eine entsprechende Zahnbürste ist beispielsweise aus der DE-C 196 00 767 bekannt. Auch können die Funktionsflächen an dem Bürstenkopf ausgebildet sein, um diesen mit dem Griffstiel zu verbinden, (vgl. DE-U-94 20 405).

Weitere Merkmale, Einzelheiten und Vorteile der vorliegenden Erfindung ergeben sich aus der nachfolgenden Beschreibung von zwei Ausführungsbeispielen. In der Zeichnung zeigen:
- Fig. 1: eine schematische Schnittansicht zur Verdeutlichung des ersten Spritzgussschrittes zur Herstellung des Bürstenkopfkörpers;
- Fig. 2: eine Darstellung gemäß Fig. 1 zur Verdeutlichung des zweiten Spritzgussschrittes und
- Fig. 3: eine Darstellung gemäß Fig. 2 für ein alternatives Ausführungsbeispiel eines Bürstenkopfes.

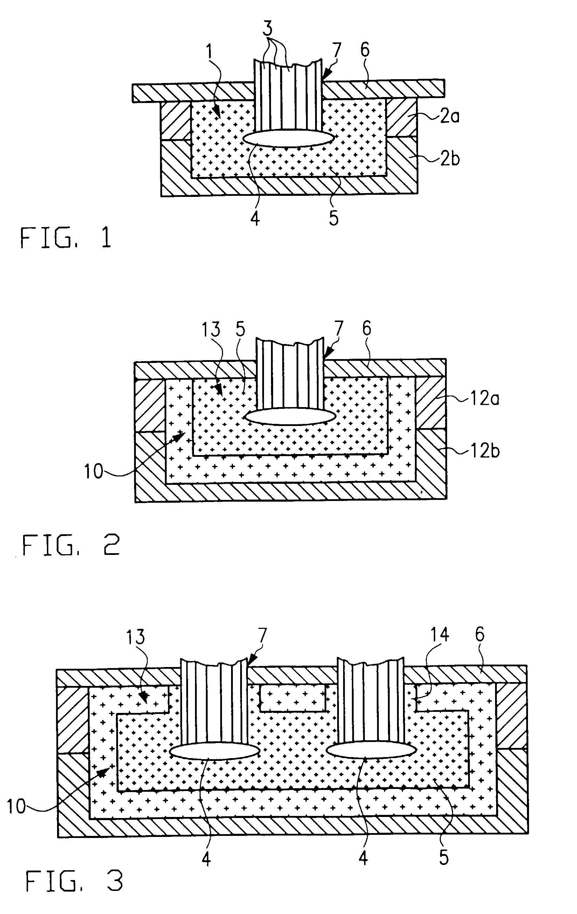

In den Figuren 1 und 2 sind zwei aufeinanderfolgende Schritte des Zweikomponenten-Spritzgießen des Bürstenkopfkörpers gezeigt. Gemäß der Darstellung in Fig. 1 wird zunächst ein Formnest 1, welches von zwei Spritzgusshälften 2a und 2b umschlossen wird, mit einer ersten Kunststoffkomponente gefüllt. In das Formnest hineinragende Enden von Borstenfilamenten 3, die über eine mittels Anschmelzen gebildete Verdickung 4 miteinander verbunden sind, werden dabei von der in das Formnest 1 eingefüllten ersten Komponente umströmt. Dabei wird die Verdickung 4 und Teile der Enden der Borstenfilamente 3 in dem derart hergestellten Borstenträger 5 aufgenommen.

Nach Erstarren der ersten, den Borstenträger 5 bildenden Kunststoffkomponente wird der Borstenträger zusammen mit einer die Spritzgusshälfte 2a abdeckenden Lochfeldplatte 6 in ein zweites Formnest 10 umgesetzt (vgl. Fig. 2). Der Borstenträger 5 wird in diesem zweiten Formnest 10 derart angeordnet, dass die von den Borstenfilamenten 3 durchragte Beborstungsfläche des Borstenträgers 5 oberflächenbündig in der zweiten Spritzgussform 10 gehalten ist. Der Borstenträger 5 liegt somit mit seiner glatten Oberfläche plan an der Innenfläche der Lochfeldplatte 6 an und dichtet in der Lochfeldplatte 6 vorgesehene Kanäle 7 zur Aufnahme der Borstenfilamente 3 ab.

In das zweite Formnest 10 eingespritzte Hartkomponente bettet den Borstenträger 5 ein. Bei diesem zweiten Spritzgussschritt der Zwei-Komponenten-Spritzgießtechnik zur Herstellung eines Bürstenkopfkörpers 13 wird durch den bündig an der Lochfeldplatte 6 anliegenden Borstenträger 5 verhindert, dass Spritzgussmasse in den Kanal 7 eindringen kann. Auch sind die Borstenfilamente 3 thermisch gegenüber der zweiten Komponente durch den Borstenträger 5 isoliert. Selbst bei dem Einspritzen einer Hartkomponente mit relativ hohem Druck in das zweite Formnest 10 ist nicht zu befürchten, dass diese Hartkomponente in die Kanäle 7 eindringt. Auch eine thermische Beeinflussung der Borstenfilamente 3 durch eine mit relativ hoher Temperatur in das zweite Formnest 10 eingespritzten Hartkomponente ist nicht zu befürchten.

Der in Fig. 2 in der Querschnittsansicht gezeigte Bürstenkopfkörper 13 hat eine von den Borstenfilamenten 3 durchragte Beborstungsfläche, die teilweise durch die erste Komponente und teilweise durch die zweite Komponente gebildet ist.

Demgegenüber wird bei dem in Fig. 3 gezeigten Ausführungsbeispiel zunächst ein Borstenträger in einem ersten, hier nicht gezeigten Formnest mittels Spritzgießen ausgebildet, der eine Oberfläche hat, die Kragen 14 aufweist, die zu Borstenbündeln zusammengefasste Borstenfilamente 3 ringförmig umgeben. In der zweiten Spritzgussform 10 liegt die Stirnseite dieser Kragen jeweils an der Innenfläche der Lochfeldplatte 6 an und dichtet die Kanäle 7 gegenüber dem zweiten Formnest 10 ab. Dieses wird in der bereits vorstehend beschriebenen Weise mit der Hartkomponente in einem zweiten Spritzgussschritt gefüllt. Der derart hergestellte Bürstenkopfkörper 13 weist auch an seiner Beborstungsfläche nahezu ausschließlich die Hartkomponente auf. Lediglich der unmittelbar die Borstenbündel umgebende Flächenabschnitt der Beborstungsfläche ist durch die erste Komponente gebildet. Der Kragen 14 kann verhältnismäßig dünn ausgebildet sein und insbesondere konisch zulaufend sein. Es ist für die Dimensionierung des Kragens 14 lediglich erforderlich, dass die Kanäle 7 gegenüber der zweiten in das Formnest 10 eingespritzten Komponente abgedichtet sind. Die Ausbildung der geometrischen Querschnittsform des Kragens 14 sowie die sich in der Draufsicht zeigende Grundfläche des Kragens 14 steht im Belieben des Fachmannes. Der Kragen kann eine runde oder polygonale Grundfläche aufweisen. Wie bereits erwähnt kann der Kragen 14 zylindrisch oder aber kegelstumpfförmig den Borstenträger 5 überragend ausgebildet sein.

Bei dem in Fig. 2 im Querschnitt gezeigten Bürstenkopfkörper ist der Borstenträger 5 U-förmig in die Hartkomponente eingebettet. Bei dem in Fig. 3 schematisch in Querschnittsansicht gezeigten Bürstenkopfkörper ist auch die Beborstungsfläche des Borstenträgers nahezu vollständig von der Hartkomponente abgedeckt, so dass der Borstenkörper nahezu vollständig von der Hartkomponente umhüllt ist.

## Patentansprüche

1. Verfahren zur Herstellung eines Bürstenkopfes, insbesondere für Zahnbürsten mit mindestens einem Borstenfilamente tragenden Bürstenkopfkörper im Wege des Spritzgießens, bei dem zur Bildung eines Borstenträgers eine erste Kunststoffkomponente in ein erstes Formnest eingespritzt wird und in das erste Formnest hineinragende Enden von Borstenfilamenten von der ersten Kunststoffkomponente umgeben werden,
**dadurch gekennzeichnet,** dass der Borstenträger in ein weiteres Formnest umgesetzt wird, welches größer als der Borstenträger ist und welches mit einer Hartkomponente gefüllt wird.

2. Verfahren nach Anspruch 1, **dadurch gekennzeichnet**, dass der Borstenträger oberflächenbündig in dem weiteren Formnest gehalten wird.

3. Verfahren nach Anspruch 1 oder 2, **dadurch gekennzeichnet**, dass ein in dem weiteren Formnest ausgebildeter Bürstenkopfträger in ein nachfolgendes Formnest umgesetzt wird, welches größer als das weitere Formnest ist und welches mit einer weichelastischen Komponente gefüllt wird.

4. Verfahren nach Anspruch 1 oder 2, **dadurch gekennzeichnet,** dass an dem Borstenträger zunächst eine weichelastische Komponente, insbesondere ein thermoplastischer Elastomer angespritzt wird und dass das derart hergestellte Bauteil danach in das weitere Formnest umgesetzt wird.

5. Verfahren nach einem der vorherigen Ansprüche, **dadurch gekennzeichnet**, dass das weitere Formnest endseitig vollständig von dem Borstenträger abgedeckt wird.

6. Verfahren nach einem der vorherigen Ansprüche, **dadurch gekennzeichnet**, dass in das erste Formnest eine Kunststoffmasse mit einem höheren Schmelzindex (MFI) als der der in das weitere Formnest eingefüllten Formmasse eingespritzt wird.

7. Verfahren nach einem der vorherigen Ansprüche, **dadurch gekennzeichnet**, dass der in das erste Formnest eingespritzte Kunststoff eine geringere Plastifiziertemperatur hat als der in das zweite Formnest eingespritzte Kunststoff.

8. Verfahren nach einem der vorherigen Ansprüche, **dadurch gekennzeichnet,** dass die erste Kunststoffkomponente eine Hartkomponente ist.

9. Verfahren nach einem der vorherigen Ansprüche, **dadurch gekennzeichnet**, dass der Borstenträger mit einer weichelastischen Komponente umspritzt wird.

10. Verfahren nach einem der vorherigen Ansprüche, **dadurch gekennzeichnet**, dass das weitere Formnest mit einem spezifischen Einspritzdruck in der Kavität von über 10⁶ Pa, vorzugsweise über 107 Pa ausgefüllt wird.

11. Bürstenkopf nach einem der vorherigen Ansprüche, **dadurch gekennzeichnet**, dass beim Ausfüllen des weiteren Formnestes ein Stiel oder Teile eines Bürstenkörpers einstückig an dem Borstenträger ausgeformt werden.

12. Bürstenkopf, insbesondere für eine Zahnbürste mit mindestens einem Borstenbündel tragenden Bürstenkörper, in dem die befestigungsseitigen Enden von Borstenfilamenten mittels Umspritzen eingebettet sind,
**dadurch gekennzeichnet**, dass der Bürstenkopfkörper (13) einen die Borstenfilamente (3) befestigungsseitig umgebenden Borstenträger umfasst, der mit einer Hartkomponente verbunden ist.

13. Bürstenkopf nach Anspruch 12, **dadurch gekennzeichnet**, dass der Borstenträger (5) in der Hartkomponente eingebettet ist.

14. Bürstenkopf nach Anspruch 12 oder 13, **dadurch gekennzeichnet**, dass durch die Hartkomponente ein Bauteil hoher Präzision gebildet ist.

15. Bürstenkopf nach einem der Ansprüche 12 bis 14, **dadurch gekennzeichnet**, dass ein aus der Hartkomponente gebildeter Träger vorgesehen ist, an dem zumindest eine Funktionsfläche vorgesehen ist.

16. Bürstenkopf nach Anspruch 15, **dadurch gekennzeichnet**, dass mindestens eine Funktionsfläche als Rastverbindungsfläche ausgebildet ist.

17. Bürstenkopf nach Anspruch 15 oder 16, **dadurch gekennzeichnet**, dass die mindestens eine Funktionsfläche als Drehmomentübertragungsfläche eines elektrisch angetriebenen Bürstenkopfes ausgebildet ist.

18. Bürstenkopf nach einem der Ansprüche 14 bis 17, **dadurch gekennzeichnet**, dass die mindestens eine Funktionsfläche als Lagerfläche eines Verschwenk- und/oder drehbaren Bürstenkopfes ausgebildet ist.

19. Bürstenkopf nach einem der Ansprüche 12 bis 18, **dadurch gekennzeichnet**, dass der Borstenträger (5) unter Zwischenlage einer weichelastischen Komponente mit der Hartkomponente verbunden ist.

20. Bürstenkopf nach Anspruch 12 oder 19, **dadurch gekennzeichnet**, dass die Borstenfilamente (3) zumindest zu einem Borstenbündel zusammengefasst sind und dass der Borstenträger (5) zumindest einen vorspringenden Kragen (14) aufweist, der die Borstenbündel umfänglich umgibt.

21. Bürstenkopf nach einem der Ansprüche 12 bis 20, **dadurch gekennzeichnet**, dass die Stirnseite des Kragens (14) flächenbündig mit dem Bürstenkopfkörper (13) ist.
